Europäisches Patentamt

European Patent Office

Office européen des brevets

(11) Publication number: **0 301 733**
A1

# EUROPEAN PATENT APPLICATION

(21) Application number: 88306505.4

(22) Date of filing: 15.07.88

(51) Int. Cl.⁴: **C08G 18/67** , **C08G 18/66** , **C03C 25/02** , **C08F 283/00**

(30) Priority: 21.07.87 JP 179907/87

(43) Date of publication of application:
01.02.89 Bulletin 89/05

(84) Designated Contracting States:
DE FR GB IT NL SE

(71) Applicant: MITSUI TOATSU CHEMICALS, INCORPORATED
2-5, Kasumigaseki 3-chome
Chiyoda-ku, Tokyo 100(JP)

(72) Inventor: Kohara, Yoshiaki
Mitsui Toatsu Apaato 2-1-1 2882, Iijimacho
Sakae-ku Yokohama-shi Kanagawa-ken(JP)
Inventor: Okita, Yasuo
1433, Nishikoiso Oisocho
Naka-gun Kanagawa-ken(JP)

(74) Representative: Stuart, Ian Alexander et al
MEWBURN ELLIS & CO. 2/3 Cursitor Street
London EC4A 1BQ(GB)

(54) Photocuring resin compositions.

(57) This invention provides a photocuring resin composition comprising (A) a urethane modified (meth)acrylate obtained by reacting (a) a mixture of a polytetramethylene glycol having a molecular weight of not less than 850 and a compound represented by the general formula $HO(CH_2)_{3\sim8}OH$, (b) a diisocyanate compound and (c) a (meth)acrylic ester having hydroxyl group, (B) a monofunctional (meth)acrylate or the like, and (C) a photopolymerization initiator. Use of the composition permits formation of a secondary covering layer of optical fibers which has a well-balanced elastic modulus and elongation and is excellent in heat and water resistance.

EP 0 301 733 A1

## PHOTOCURING RESIN COMPOSITIONS

This invention relates to a photocuring resin composition, and particularly to a covering material of glass fibers for optical transmission (referred to as optical fibers hereinafter). Preferred embodiments relate to a covering material of optical fibers which gives a high modulus of elasticity and large elongation, has a so-called well-balanced elastic modulus and elongation, and is excellent in heat resistance and water resistance.

Optical fibers are generally given coverings of high molecular weight substances immediately after their spinning so as to protect them from physical and chemical attack from external environment. As such covering materials are known thermosetting resins such as silicone resins, urethane resins and epoxy resins and ultraviolet-curable resins of the urethane-acrylate type, epoxy-acrylate type, polyester-acrylate type and the like.

Optical fibers are usually given secondary coatings additionally on the primary coatings with a view to prevention of microbending.

Incidentally, secondary coating materials of optical fibers are required in their cured form to have such properties as a well-balanced elastic modulus and elongation, low temperature-dependence of elastic modulus and excellent heat resistance and water resistance.

However, the conventional ultraviolet-curable resins have not been endowed with such required properties adequately in a well balanced state and hence are not satisfactory. They are particularly inferior in the balance between elastic modulus and elongation such that when the elastic modulus is large, the elongation is small while when the elongation is large, the elastic modulus is insufficient. This imbalance has been responsible for the reduction of the reliability of optical fibers.

Embodiments of this invention may provide coating materials capable of improving the reliability of optical fibers, especially coating materials suitable for secondary coatings.

Embodiments of this invention may provide secondary coating materials of optical fibers which give high elastic moduli and large elongations, exhibit so-called well-balanced elastic moduli and elongations, and are excellent in heat resistance and water resistance in their cured form.

The invention can be embodied by using the following photocuring resin composition as a coating material of optical fibers. At the same time, optical fibers coated with the composition are provided.

A photocuring resin composition comprising, in combination,

(A) a urethane modified (meth)acrylate obtained by reacting

(a) a 8 : 2 to 4 : 6 mixture (equivalent ratio) of a polytetramethylene glycol having a molecular weight of not less than 850 and a compound represented by the general formulas [I]:

HO(CH$_2$)$_n$OH    [I]

wherein n is an integer of 3 - 8,

(b) a diisocyanate compound, and

(c) a (meth)acrylic ester having hydroxyl group,

(B) a monofunctional (meth)acrylate, polyfunctional (meth)acrylate or N-vinylpyrrolidone, and

(C) a photopolymerization initiator.

The term "(meth)acrylate" mentioned herein means both acrylates and methacrylates. This definition will hereinafter equally be applied to the terms "urethane modified (meth)acrylate", "(meth)acrylic ester", "-(meth)acryloyl group", "(meth)acrylic acid", "hydroxyethyl (meth)acrylate", "hydroxypropyl (meth)acrylate", "monofunctional (meth)acrylate", "multifunctional (meth)acrylate".

The urethane modified (meth)acrylate (A), one of the components of the present invention, is a compound obtained by reacting (a) a 8 : 2 to 4 : 6 mixture (equivalent ratio) of a polytetramethylene glycol having a molecular weight of not less than 850 and the compound represented by the general formula [I], (b) a diisocyanate compound and (c) a (meth)acrylic ester having hydroxyl group.

Specific examples of the aforesaid 8 : 2 to 4 : 6 mixture (equivalent ratio) of a polytetramethylene glycol having a molecular weight of not less than 850 and a compound represented by the general formula [I] are mixtures each comprising one polytetramethylene glycol having a molecular weight of not less than 850, selected, for example, from PTG-850, PTG-1000, PTG-1300, PTG-1500, PTG-1800, PTG-2000 and PTG-3000 (products of Hodogaya Chemicals Co., Ltd.) and one compound represented by the general formula [I] as selected from trimethylene glycol, 1,4-butanediol, 1,5-pentanediol, 1,6-hexanediol, 1,7-heptanediol, 1,8-octanediol.

The mixing proportion (the ratio of a polytetramethylene glycol having a molecular weight of not less than 850 to a compound represented by the general formula [I]) is 8 : 2 to 4 : 6 by equivalent ratio. If the proportion of a polytetramethylene glycol having a molecular weight of less than 850 exceeds 8 and hence

2

EP 0 301 733 A1

is outside the above-described proportion range, the elastic modulus of the resultant cured product will be reduced. On the other hand, if it is less than 4 and also outside the above-described proportion range, the cured product will have a lowered elongation. In either cases, the elastic modulus and the elongation will be poorly balanced. Further, when the molecular weight of the polytetramethylene glycol is less than 850, the elongation will be reduced and the balance between the elastic modulus and the elongation will be poor. Thus, a molecular weight of 1,000 - 2,000 is preferred.

Examples of the above-described diisocyanate compound (b) may include aromatic or aliphatic diisocyanate compounds such as 2,4-tolylenediisocyanate, 2,6-tolylene diisocyanate, diphenylmethane-4,4'-diisocyanate, xylylenediisocyanate, naphthylenediisocyanate, hexamethylenediisocyanate and isophoronediisocyanate and compounds each formed by reacting each of these diisocyanate compounds with a polyol such as ethylene glycol, hexanediol, trimethylolpropane, glycerol or hexanetriol in the presence of excess isocyanate group. These diisocyanate compounds may be used singly or two or more of them may be used in combination.

The above-described (meth)acrylate having hydroxyl group (c) is an unsaturated monohydroxy compound containing a hydroxyl group and one or more (meth)acryloyl groups in the molecule, for example, 2-hydroxyethyl (meth)acrylate, 2-hydroxypropyl (meth)acrylate, N-hydroxymethyl (meth)acrylamide, diethyleneglycol mono(meth)acrylate, trimethylolpropane di(meth)acrylate, polyethyleneglycol mono(meth)-acrylate or an equimolar reaction product of (meth)acrylic acid with glycidyl (meth)acrylate. These compounds may be used alone or two or more of them may be used in combination.

The amounts of the mixture (a) and compounds (b) and (c) are generally 1.1 - 2 equivalents of (b) and 0.1 - 1.2 equivalents of (c) per equivalent of (a), preferably 1.2 - 1.8 equivalents of (b) and 0.2 - 1 equivalent of (c) per equivalent of (a). No particular limitation is imposed on the order of reaction among (a), (b) and (c). The reaction may be conducted in any of the following manners: for example, (a), (b) and (c) are subjected to reaction at the same time; (a) and (b) are reacted first and the resultant product is then reacted with (c); and (b) and (c) are first reacted and then the resultant product is reacted with (a).

The reaction temperature ranges generally from room temperature to 150°C. In the reaction, it is feasible to use conventional catalysts for polyurethane such as triethylamine and dibutyltin dilaurate so as to accelerate the reaction. In order to prevent the polymerization of (meth)acryloyl groups, conventional radical polymerization inhibitors are used such as benzoquinone, hydroquinone, hydroquinone monomethyl ether, catachol and phenothiazine, or introduced air or oxygen into the reaction system.

The terminal group of the urethane modified (meth)acrylate of this invention is usually (meth)acryloyl group, but may partially be isocyanate group or hydroxyl group.

Regarding the monofunctional (meth)acrylate or polyfunctional (meth)acrylate (B), the monofunctional (meth)acrylate may include, for example, 2-ethylhexyl (meth)acrylate, dodecyl (meth)acrylate, phenoxyethyl (meth)acrylate, cyclohexyl (meth)acrylate, isobornyl (meth)acrylate, dicyclopentenyl (meth)acrylate and dicyclopentenyloxyethyl (meth)acrylate. These monofunctional (meth)acrylates may be used alone or two or more of them may be used in combination.

As the polyfunctional (meth)acrylate may be mentioned ethylene glycol di(meth)acrylate, neopentyl glycol di(meth)acrylate, 1,4-butanediol di(meth)acrylate, the di(meth)acrylate of bisphenol-A•ethylene oxide additive, bisacryloyloxyethyl•hydroxyethyl isocyanurate, trisacryloyloxyethyl isocyanurate, trimethylolpropane tri(meth)acrylate, dipentol hexa(meth)acrylate. These polyfunctional (meth)acrylates may be used singly or two or more of them may be used in combination.

The mixing proportion of (A) and (B) in the coating material of the present invention is in the range of from 30/70 to 70/30, preferably from 40/60 to 60/40 in terms of the weight ratio of (A)/(B).

The photopolymerization initiator (C) of the present invention may include, for example, benzoin, benzoin methyl ether, benzoin isopropyl ether, benzoin butyl ether, benzyl, benzophenone, 2-hydroxy-2-methylpropiophenone, 2,2-diethoxyacetophenone, benzyldimethylketal, anthraquinone, chloroanthraquinone, ethylanthraquinone, butylanthraquinone, diphenyl sulfide, dithiocarbamate, 2-chlorothioxanthone, α-chloromethyl naphthaleneanthracene and 3,3',4,4'-tetra-(t-butyl peroxycarbonyl)benzophenone. Amines such as Michler's ketone, triethylamine and alkylmorpholines may be used together with each of these photopolymerization initiators. The proportion of the photopolymerization initiator to be added is generally less than 10 wt.%, preferably 1 wt.% - 5 wt.% of the coating material composition of this invention.

The coating material of this invention may further be incorporated with various additives such as a silane coupling agent, antioxidant and filler, as required.

Glass for optical fibers is quartz base glass composed principally of silica. The quartz base material is heated to about 2,000°C and spun into a fiber having an outer diameter of 125 ± 3 μm at a drawing speed of 60 - 300 m/min. In order to coat the above-described coating material on the fiber, it is usual to let the fiber pass through a vessel containing the coating material as soon as the fiber has been spun. The coating

3

thickness is so adjusted that the cured film may attain a thickness of generally 40 - 80 μm, preferably about 60 μm. A typical curing method is to irradiate ultraviolet rays to the fiber in an atmosphere of nitrogen by means of a high pressure mercury lamp directly after its coating.

Where the coating material of the present invention is used as a secondary coating material, it is recommended to coat the fiber first with a thermosetting resin such as a conventional silicone resin, urethane resin or epoxy resin or a ultraviolet-curing resin of the urethane-acrylate type, epoxy-acrylate type, polyester-acrylate type and then cure the coated surface by usual procedures, and thereafter cover the surface of the resultant fiber with the composition of the present invention in the same manner as described above.

The present invention will be described with reference to the following Synthesis Examples, Examples and Comparative Examples.

Synthesis Example 1

Into a 1,000 ml flask equipped with a stirrer and thermometer were charged 250 parts by weight of a polytetramethylene glycol having a molecular weight of 1,000 (product of Hodogaya Chemicals Co., Ltd.: PTG-1000), 22.5 parts by weight of 1,4-butanediol and 130.5 parts by weight of 2,4-tolylenediisocyanate. The resulting mixture was subjected to reaction at 70°C for 4 hours in the stream of nitrogen. In consequence, the number of the NCO groups was found to decrease to one third of the initial value. Then, the liquid reaction mixture was added with 63.8 parts by weight of hydroxyethyl acrylate, 0.2 part by weight of hydroquinone and 0.1 part by weight of dibutyltin dilaurate, followed by reaction at 70°C for additional 5 hours while bubbling air into the liquid reaction mixture, thereby synthesizing a urethane modified acrylate (A-1).

Synthesis Example 2

Into a 1,000 ml flask equipped with a stirrer and thermometer were charged 300 parts by weight of a polytetramethylene glycol having a molecular weight of 2,000 (product of Hodogaya Chemicals Co., Ltd.: PTG-2000), 13.5 parts by weight of 1,4-butanediol and 87 parts by weight of 2,4-tolylenediisocyanate. The resulting mixture was subjected to reaction at 70°C for 4 hours in the stream of nitrogen. In consequence, the number of the NCO groups was found to decrease to two fifth of the initial value. Then, the liquid reaction mixture was added with 57.2 parts by weight of hydroxypropyl acrylate, 0.2 part by weight of hydroquinone and 0.1 part by weight of dibutyltin dilaurate, followed by reaction at 70°C for additional 5 hours while bubbling air into the liquid reaction mixture, thereby synthesizing a urethane modified acrylate (A-2).

Synthesis Example 3

Into a 1,000 ml flask equipped with a stirrer and thermometer were charged 350 parts by weight of a polytetramethylene glycol having a molecular weight of 1,000 (product of Hodogaya Chemicals Co., Ltd.: PTG-1000), 17.7 parts by weight of 1,6-hexanediol and 130.5 parts by weight of 2,4-tolylenediisocyanate. The resulting mixture was subjected to reaction at 70°C for 4 hours in the stream of nitrogen. In consequence, the number of the NCO groups was found to decrease to one third of the initial value. Then, the liquid reaction mixture was added with 63.8 parts by weight of hydroxyethyl acrylate, 0.3 part by weight of hydroquinone and 0.1 part by weight of dibutyltin dilaurate, followed by reaction at 70°C for additional 5 hours while bubbling air into the liquid reaction mixture, thereby synthesizing a urethane modified acrylate (A-3).

Synthesis Example 4

Into a 1,000 ml flask equipped with a stirrer and thermometer were charged 200 parts by weight of a polytetramethylene glycol having a molecular weight of 1,000 (product of Hodogaya Chemicals Co., Ltd.: PTG-1000), 27 parts by weight of 1,4-butanediol and 126 parts by weight of hexamethylenediisocyanate. The resulting mixture was subjected to reaction at 70°C for 5 hours in the stream of nitrogen. In

4

consequence, the number of the NCO groups was found to decrease to one third of the initial value. Then, the liquid reaction mixture was added with 63.8 parts by weight of hydroxyethyl acrylate, 0.2 part by weight of hydroquinone and 0.1 part by weight of dibutyltin dilaurate, followed by reaction at 70°C for additional 5 hours while bubbling air into the liquid reaction mixture, thereby synthesizing a urethane modified acrylate (A-4).

Synthesis Example 5

Into a 1,000 ml flask equipped with a stirrer and thermometer were charged 500 parts by weight of a polytetramethylene glycol having a molecular weight of 1,000 (product of Hodogaya Chemicals Co., Ltd.: PTG-1000) and 130.5 parts by weight of 2,4-tolylenediisocyanate. The resulting mixture was subjected to reaction at 70°C for 4 hours in the stream of nitrogen. In consequence, the number of the NCO groups was found to decrease to one third of the initial value. Then, the liquid reaction mixture was added with 63.8 parts by weight of hydroxyethyl acrylate, 0.3 part by weight of hydroquinone and 0.1 part by weight of dibutyltin dilaurate, followed by reaction at 70°C for additional 5 hours while bubbling air into the liquid reaction mixture, thereby synthesizing a urethane modified acrylate (A-5).

Synthesis Example 6

Into a 1,000 ml flask equipped with a stirrer and thermometer were charged 325 parts by weight of a polytetramethylene glycol having a molecular weight of 650 (product of Hodogaya Chemicals Co., Ltd.: PTG-650), 45 parts by weight of 1,4-butanediol and 130.5 parts by weight of 2,4-tolylenediisocyanate. The resulting mixture was subjected to reaction at 70°C for 4 hours in the stream of nitrogen. In consequence, the number of the NCO groups was found to decrease to one third of the initial value. Then, the liquid reaction mixture was added with 127.6 parts by weight of hydroxyethyl acrylate, 0.2 part by weight of hydroquinone and 0.1 part by weight of dibutyltin dilaurate, followed by reaction at 70°C for additional 5 hours while bubbling air into the liquid reaction mixture, thereby synthesizing a urethane modified acrylate (A-6).

Synthesis Example 7

Into a 1,000 ml flask equipped with a stirrer and thermometer were charged 450 parts by weight of a polytetramethylene glycol having a molecular weight of 1,000 (product of Hodogaya Chemicals Co., Ltd.: PTG-1000), 4.5 parts by weight of 1,4-butanediol and 130.5 parts by weight of 2,4-tolylenediisocyanate. The resulting mixture was subjected to reaction at 70°C for 4 hours in the stream of nitrogen. In consequence, the number of the NCO groups was found to decrease to one third of the initial value. Then, the liquid reaction mixture was added with 63.8 parts by weight of hydroxyethyl acrylate, 0.2 part by weight of hydroquinone and 0.1 part by weight of dibutyltin dilaurate, followed by reaction at 70°C for additional 5 hours while bubbling air into the liquid reaction mixture, thereby synthesizing a urethane modified acrylate (A-7).

Synthesis Example 8

Into a 1,000 ml flask equipped with a stirrer and thermometer were charged 300 parts by weight of a polytetramethylene glycol having a molecular weight of 1,000 (product of Hodogaya Chemicals Co., Ltd.: PTG-1000), 63 parts by weight of 1,4-butanediol and 261 parts by weight of 2,4-tolylenediisocyanate. The resulting mixture was subjected to reaction at 70°C for 4 hours in the stream of nitrogen. In consequence, the number of the NCO groups was found to decrease to one third of the initial value. Then, the liquid reaction mixture was added with 127.6 parts by weight of hydroxyethyl acrylate, 0.2 part by weight of hydroquinone and 0.1 part by weight of dibutyltin dilaurate, followed by reaction at 70°C for additional 5 hours while bubbling air into the liquid reaction mixture, thereby synthesizing a urethane modified acrylate (A-8).

Example 1

Fifty parts by weight of the urethane modified acrylate (A-1) obtained in Synthesis Example 1 were mixed with 15 parts by weight of trisacryloyloxyethyl isocyanurate (product of Toa Gosei Chemicals Co., Ltd.: Arronix M-315), 10 parts by weight of N-vinylpyrrolidone, 10 parts by weight of isobornyl acrylate, 15 parts by weight of phenoxyethyl acrylate and 3 parts by weight of a photopolymerization initiator, benzyldimethylketal, to obtain a coating material.

The coating material was coated on a glass plate to a thickness of 200 microns, followed by curing at 160 mJ/cm² by means of a high pressure mercury lamp. The properties of the cured film were measured in accordance with JIS K-7113. The results are summarized in Table 1.

Example 2

Forty parts by weight of the urethane modified acrylate (A-2) obtained in Synthesis Example 2 were mixed with 20 parts by weight of trisacryloyloxyethyl isocyanurate (product of Toa Gosei Chemicals Co., Ltd.: Arronix M-315), 10 parts by weight of N-vinylpyrrolidone, 15 parts by weight of isobornyl acrylate, 15 parts by weight of dicyclopentenyl acrylate and 3 parts by weight of a photopolymerization initiator, benzyldimethylketal, to obtain a coating material.

The coating material was treated in the same manner as in Example 1 to obtain a cured film. The properties of the film were measured also in the same manner as in Example 1. The results are summarized in Table 1.

Example 3

Fifty five parts by weight of the urethane modified acrylate (A-3) obtained in Synthesis Example 3 were mixed with 10 parts by weight of trisacryloyloxyethyl isocyanurate (product of Toa Gosei Chemicals Co., Ltd.: Arronix M-315), 5 parts by weight of trimethylolpropane triacrylate, 10 parts by weight of N-vinylpyrrolidone, 20 parts by weight of isobornyl acrylate and 3 parts by weight of a photopolymerization initiator, benzyldimethylketal, to obtain a coating material.

The coating material was treated in the same manner as in Example 1 to obtain a cured film. The properties of the film were measured also in the same manner as in Example 1. The results are summarized in Table 1.

Example 4

Sixty parts by weight of the urethane modified acrylate (A-4) obtained in Synthesis Example 4 were mixed with 25 parts by weight of bisacryloyloxyethyl hydroxyethyl isocyanurate (product of Toa Gosei Chemicals Co., Ltd.: Arronix M-215), 10 parts by weight of N-vinylpyrrolidone, 5 parts by weight of isobornyl acrylate and 3 parts by weight of a photopolymerization initiator, benzyldeimethylketal, to obtain a coating material.

The coating material was treated in the same manner as in Example 1 to obtain a cured film. The properties of the film were measured also in the same manner as in Example 1. The results are summarized in Table 1.

Comparative Example 1

Fifty parts by weight of the urethane modified acrylate (A-5) obtained in Synthesis Example 5 were mixed with 15 parts by weight of trisacryloyloxyethyl isocyanurate (product of Toa Gosei Chemicals Co., Ltd.: Arronix M-315), 10 parts by weight of N-vinylpyrrolidone, 10 parts by weight of isobornyl acrylate, 15 parts by weight of phenoxyethyl acrylate and 3 parts by weight of a photopolymerization initiator, benzyldimethylketal, to obtain a coating material.

The coating material was treated in the same manner as in Example 1 to obtain a cured film. The properties of the film were measured also in the same manner as in Example 1. The results are summarized in Table 1.

6

Comparative Example 2

Fifty parts by weight of the urethane modified acrylate (A-6) obtained in Synthesis Example 6 were mixed with 15 parts by weight of trisacryloyloxyethyl isocyanurate (product of Toa Gosei Chemicals Co., Ltd.: Arronix M-315), 10 parts by weight of N-vinylpyrrolidone, 10 parts by weight of isobornyl acrylate, 15 parts by weight of phenoxyethyl acrylate and 3 parts by weight of a photopolymerization initiator, benzyldimethylketal, to obtain a coating material.

The coating material was treated in the same manner as in Example 1 to obtain a cured film. The properties of the film were measured also in the same manner as in Example 1. The results are summarized in Table 1.

Comparative Example 3

Fifty parts by weight of the urethane modified acrylate (A-7) obtained in Synthesis Example 7 were mixed with 15 parts by weight of trisacryloyloxyethyl isocyanurate (product of Toa Gosei Chemicals Co., Ltd.: Arronix M-315), 10 parts by weight of N-vinylpyrrolidone, 10 parts by weight of isobornyl acrylate, 15 parts by weight of phenoxyethyl acrylate and 3 parts by weight of a photopolymerization initiator, benzyldimethylketal, to obtain a coating material.

The coating material was treated in the same manner as in Example 1 to obtain a cured film. The properties of the film were measured also in the same manner as in Example 1. The results are summarized in Table 1.

Comparative Example 4

Fifty parts by weight of the urethane modified acrylate (A-8) obtained in Synthesis Example 8 were mixed with 15 parts by weight of trisacryloyloxyethyl isocyanurate (product of Toa Gosei Chemicals Co., Ltd.: Arronix M-315), 10 parts by weight of N-vinylpyrrolidone, 10 parts by weight of isobornyl acrylate, 15 parts by weight of phenoxyethyl acrylate and 3 parts by weight of a photopolymerization initiator, benzyldimethylketal, to obtain a coating material.

The coating material was treated in the same manner as in Example 1 to obtain a cured film. The properties of the film were measured also in the same manner as in Example 1. The results are summarized in Table 1.

Evaluation of Covering Materials:

Evaluation was made for the coating materials obtained in the foregoing Examples and Comparative Examples with respect to the following items.

(1) Viscosity of coating material:

Viscosity was measured by a BM type viscometer using rotor No. 3 at a revolution of 30 r.p.m. and a temperature of 25°C.

(2) Tensile strength and elongation:

A cured film was prepared by coating a coating material on a glass plate to a thickness of about 200 $\mu$m and irradiating ultraviolet rays of 80 mJ/cm$^2$ to the coated plate by means of a 80 W/cm high pressure mercury lamp in an atmosphere of gaseous nitrogen. Then, the tensile strength and elongation of the resulting film were measured in accordance with JIS K-7113.

7

(3) 2.5% Tensile modulus:

A cured film was prepared in the same manner as described in the above item (2), Tensile strength and elongation. The tensile modulus of the film was measured in accordance with JIS K-7113.

(4) Heat resistance:

A cured film was prepared in the same manner as described in the above item (2), Tensile strength and elongation. Thereafter, the film was put in a constant temperature chamber kept at 80° C. It was taken out of the chamber after 30 days. The breaking strength and elongation and 2.5% elastic modulus of the resulting film were tested in the same manner as described respectively in the above items (2) and (3).

(5) Water resistance:

A cured film was prepared in the same manner as described in the above item (2), Tensile strength and elongation. Thereafter, the film was immersed in hot water kept at 80° C. It was taken out of the water after 30 days. The tensile strength and elongation and 2.5% tensile modulus of the resulting film were tested in the same manner as described respectively in the above items (2) and (3).

(6) Transmission loss:

An optical fiber having an outer diameter of 125 μm, which had been formed by spinning at a rate of 60 m/min., was coated primarily with a coating material having a 2.5% elastic modulus of 17.0 kg/cm$^2$ [a primary coating material of urethane-acrylate type, OX-124 (product of Mitsui Toatsu Chemicals, Inc.)] to an outer diameter of 300 μm as soon as it had been spun. The coating material coated on the fiber was allowed to cure at once by use of a 3.2 KW high pressure mercury lamp. Then, the resulting coated fiber was coated secondarily with each of the coating materials obtained in the above-described Examples and Comparative Examples to an outer diameter of 400 μm and each of the coated secondary coating materials was caused to cure without delay by means of a 3.2 KW high pressure mercury lamp. The optical transmission loss of each of these covered optical fibers was measured at a wavelength of 1.3 μm at 23° C and -40° C.

## Table 1

| | Example | | | | Comparative Example | | | |
|---|---|---|---|---|---|---|---|---|
| | 1 | 2 | 3 | 4 | 1 | 2 | 3 | 4 |
| Coating material viscosity (cps/25°C) | 5200 | 7100 | 4000 | 8200 | 4100 | 2500 | 3300 | 8500 |
| Tensile strength (kg/cm$^2$) | 360 | 280 | 370 | 400 | 340 | 380 | 260 | 480 |
| Elongation (at break) (%) | 80 | 160 | 70 | 60 | 30 | 32 | 100 | 18 |
| 2.5% Tensile modulus (kg/cm$^2$) | 5100 | 3200 | 5500 | 6800 | 4900 | 6250 | 2800 | 7200 |
| Heat resistance: (after 30 days in air at 80°C) | | | | | | | | |
| Tensile strength (kg/cm$^2$) | 320 | 220 | 240 | 280 | 230 | 305 | 220 | 290 |
| Elongation (at break) (%) | 65 | 120 | 50 | 45 | 18 | 24 | 80 | 8 |
| 2.5% Tensile modulus (kg/cm$^2$) | 4600 | 2400 | 4100 | 4800 | 2740 | 5600 | 2700 | 4500 |

EP 0 301 733 A1

EP 0 301 733 A1

## Table 1 (cont'd.)

| | | Example | | | | Comparative Example | | | |
|---|---|---|---|---|---|---|---|---|---|
| | | 1 | 2 | 3 | 4 | 1 | 2 | 3 | 4 |
| Water resistance: (after 30 days in hot water at 80°C) | | | | | | | | | |
| Tensile strength $(kg/cm^2)$ | | 290 | 210 | 220 | 270 | 220 | 295 | 210 | 210 |
| Elongation (at break) (%) | | 70 | 110 | 55 | 40 | 20 | 26 | 90 | 10 |
| 2.5% Tensile modulus $(kg/cm^2)$ | | 4300 | 2500 | 3950 | 4900 | 2790 | 5200 | 2550 | 3600 |
| Transmission loss (dB/km) | (23°C) | 0.40 | 0.41 | 0.40 | 0.44 | 0.45 | 0.44 | 0.55 | 0.50 |
| | (-40°C) | 0.40 | 0.41 | 0.40 | 0.44 | 0.75 | 0.74 | 1.00 | 0.80 |

**Claims**

1. A photocuring resin composition comprising, in combination,

(A) a urethane modified (meth)acrylate obtained by reacting

(a) a 8 : 2 to 4 : 6 mixture (equivalent ratio) of a polytetramethylene glycol having a molecular weight of not less than 850 and a compound represented by the general formula [I]:

HO(CH$_2$)$_n$OH    [I]

wherein n is an integer of 3 - 8,

(b) a diisocyanate compound, and

(c) a (meth)acrylic ester having hydroxyl group,

(B) a monofunctional (meth)acrylate, polyfunctional (meth)acrylate or N-vinylpyrrolidone, and

(C) a photopolymerization initiator.

2. The resin composition as claimed in Claim 1, wherein the amounts of the mixture (a) and compounds (b) and (c) are 1.1 - 2 equivalents of (b) and 0.1 - 1.2 equivalents of (c) per equivalent of (a).

3. The resin composition as claimed in Claim 2, wherein said amounts are 1.2 - 1.8 equivalents of (b) and 0.2 - 1 equivalent of (c) per equivalent of (a).

4. The resin composition as claimed in Claim 1,2 or 3, wherein the compound represented by the general formula [I] is trimethylene glycol, 1,4-butanediol, 1,5-pentanediol, 1,6-hexanediol, 1,7-heptanediol or 1,8-octanediol.

5. The resin composition as claimed in any preceding claim, wherein the molecular weight of the polytetramethylene glycol is in the range of 1,000 - 2,000.

6. The resin composition as claimed in any preceding claim, wherein the diisocyanate compound is an aromatic or aliphatic diisocyanate.

7. The resin composition as claimed in any of claims 1 to 5, wherein the diisocyanate compound is a compound formed by reacting an aromatic or aliphatic diisocyanate with a polyol.

8. The resin composition as claimed in Claim 5 or 6, wherein the diisocyanate compound is 2,4-tolylenediisocyanate, 2,6-tolylenediisocyanate, diphenylmethane-4,4'-diisocyanate, xylylenediisocyanate, naphthylenediisocyanate, hexamethylenediisocyanate or isophoronediisocyanate.

9. The resin composition as claimed in Claim 6, wherein the polyol is ethylene glycol, hexanediol, trimethylolpropane, glycerol or hexanetriol.

10. The resin composition as claimed in any preceding claim, wherein the (meth)acrylic ester having hydroxyl group is 2-hydroxyethyl (meth)acrylate, 2-hydroxypropyl (meth)acrylate, N-hydroxymethyl (meth)-acrylamide, diethylene glycol mono(meth)acrylate, trimethylolpropane di(meth)acrylate, polyethylene glycol mono(meth)acrylate or an equimolar reaction product of (meth)acrylic acid with glycidyl (meth)acrylate.

11. The resin composition as claimed in any preceding claim, wherein the mixing proportion of (A) to (B) is in the range of from 30/70 to 70/30 in terms of the ratio of (A)/(B).

12. An optical fiber covered with a photocuring resin composition comprising, in combination,

(A) a urethane modified (meth)acrylate obtained by reacting

(a) a 8 : 2 to 4 : 6 mixture (equivalent ratio) of a polytetramethylene glycol having a molecular weight of not less than 850 and a compound represented by the general formula [I]:

HO(CH$_2$)$_n$OH    [I]

wherein n is an integer of 3 - 8,

(b) a diisocyanate compound, and

(c) a (meth)acrylic ester having hydroxyl group,

(B) a monofunctional (meth)acrylate, multifunctional (meth)acrylate or N-vinylpyrrolidone, and

(C) a photopolymerization initiator.

13. A fiber according to claim 2, wherein the photocuring resin composition is according to any of claims 1 to 11.

| | European Patent Office | EUROPEAN SEARCH REPORT | Application Number |
|---|---|---|---|

EP 88 30 6505

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 301 209  (D.H. LORENZ et al.)  * Claim 13; column 2, line 66 - column 4, line 54; example 1 * | 1 | C 08 G  18/67<br>C 08 G  18/66<br>C 03 C  25/02<br>C 08 F 283/00 |
| A | GB-A-1 133 887  (W.R. GRACE & CO.)  * Claims 10-12; page 3, lines 12-19; page 4, formula 1; page 5, lines 4-26 * | 1 | |
| A | GB-A-2 163 443  (THE YOKOHAMA RUBBER)  * Claims 1-4; page 1, lines 5-6 * | 1,12 | |
| A | EP-A-0 122 611  (TAKEDA)  * Claims 1,7-10; page 3, lines 22-27; page 4, line 33 - page 5, line 7 * | 1 | |

TECHNICAL FIELDS SEARCHED (Int. Cl.4)

C 08 G
C 03 C

The present search report has been drawn up for all claims

| Place of search | Date of completion of the search | Examiner |
|---|---|---|
| THE HAGUE | 11-11-1988 | VAN PUYMBROECK M.A. |